# EUROPÄISCHE PATENTSCHRIFT

(11) **EP 1 500 588 B1**
(45) Veröffentlichungstag und Bekanntmachung des Hinweises auf die Patenterteilung: **07.10.2009**
(21) Anmeldenummer: 03719273.9
(22) Anmeldetag: 14.04.2003
(51) Int. Cl.: B64C 11/46, B64C 27/08

(54) **VERFAHREN ZUR ERZEUGUNG EINES HUBS UND EINES HORIZONTALSCHUBS**
METHOD FOR PRODUCING A LIFT AND A HORIZONTAL THRUST
PROCEDE POUR CREER UNE PORTANCE ET UNE POUSSEE VERTICALE

(30) Priorität: 16.04.2002 RU 2002109756
(43) Veröffentlichungstag der Anmeldung: 26.01.2005
(73) Patentinhaber: Obschestvo s Ogranichennoi Otvetstvennostyu Midera-k, Moscow, 123053 (RU)
(72) Erfinder: AKARO, Andrey Igorevich, Moscow, 105037 (RU); DENISOV, Anatoly Alekseevich, St.Petersburg, 191002 (RU); ZELINSKY, Anatoly Mikhailovich, St. Petersburg, 197374 (RU); MEDVEDEV, Mikhail Mikhailovich, Moskovskaya obl., 140186 (RU)
(74) Vertreter: Jeck, Anton
(86) Internationale Anmeldenummer: PCT/RU2003/000157
(87) Internationale Veröffentlichungsnummer: WO 2003/086858

(56) Entgegenhaltungen:
- US-A- 1 981 442
- US-A- 2 589 826
- US-A- 3 246 861
- US-A- 3 721 403
- DZHONSON U.: 'Teoriya vertoleta kn. 1. M.' MIR 1983, Seiten 37 - 38, XP008095375
- DMITRIEV I.S. ET AL.: 'Sistema upravleniya odnovintovykh vertoletov' M. MASHINOSTROENIE 1969, Seiten 53 - 54, XP008095238

## Beschreibung

Die Erfindung bezieht sich auf die Aerodynamik von Fluggeräten und stellt ein Verfahren zur Erzeugung einer Auftriebskraft und eines Horizontalschubs durch aerodynamische Flächen dar, die mittels eines Hub- und Zugvortriebsaggregats des Fluggeräts in Bewegung gesetzt werden.

Aus Dokument US 3,721,403, welches als der nächstliegende Stand der Technik angesehen wird, ist ein Verfahren zur Erzengung einer Auftriebskraft und eines Horizontalschubs durch aerodynamische Flächen eines Fluggeräts, sowie ein solches Fluggerät bekannt.

Ebenfalls ist ein Verfahren zur Erzeugung einer Auftriebskraft und eines Horizontalschubs mit einem Hauptdrehflügel eines Hubschraubers bekannt, das die Bewegung der Flugschaufeln im Kreis und deren Schwankungen um die Längsachse herum einschließt (A.M. Volodenko "Hubschrauber - Arbeiter und Kämpfer", M. Verlag DOSAAF, UdSSR, 1984, S. 82-83, Bild 24).

Der Nachteil dieses bekannten Verfahrens ist der niedrige Wirkungsgrad der Auftriebskrafterzeugung, weil die Querschnitte der Flugschaufeln unterschiedliche Geschwindigkeit in der Luft haben, die um so geringer sind, je geringer die Radien derjenigen Kreise sind, die mit diesen Querschnitten beschrieben werden. Im Ergebnis erweist sich die Oberflächenverteilung der Luftkräfte auf den Flugschaufeln als ungleichmäßig (die etwa der quadratischen entspricht), wodurch der Wirkungsgrad dieses Verfahrens zur Erzeugung der Auftriebskraft wesentlich vermindert wird.

Weiterhin ist ein Verfahren zur Erzeugung einer Auftriebskraft und eines Horizontalschubs mit den aerodynamischen Oberflächen (Flugschaufeln) eines Hubschraubers bekannt, das die Bewegung der aerodynamischen Flächen im Kreis und ihre Schwankungen einschließt (W. Jonson "Theorie des Hubschraubers", Buch 1, M., Verlag "Mir", 1983, S. 37-38, Bild 1.6). Dieses Verfahren ist ein nahes Analogon zur Erfindung.

Der Nachteil dieses bekannten Verfahrens ist der geringe Wirkungsgrad der Erzeugung der Auftriebskraft, weil die Querschnitte der Flugschaufeln unterschiedliche Geschwindigkeiten in der Luft haben, die umso geringer sind, je geringer die Radien derjenigen Kreise sind, die mit diesen Querschnitten beschrieben werden. Im Ergebnis erweist sich die Oberflächenverteilung der Luftkraft auf den Flugschaufeln als ungleichmäßig (die etwa der quadratischen entspricht), wodurch der Wirkungsgrad dieses Verfahrens zur Erzeugung der Auftriebskraft wesentlich vermindert wird.

Die Erfindung hat zur Aufgabe, ein Verfahren zur Erzeugung einer Auftriebskraft und eines Horizontalschubs durch aerodynamische Flächen zu schaffen, bei dem eine fast gleichmäßige Verteilung der Luftkräfte auf den aerodynamischen Flächen gewährleistet ist, so dass eine hoher Wirkungsgrad zur Erzeugung sowohl der Auftriebskraft als auch des Horizontalschubs erzielt wird.

Die Aufgabe zur Schaffung eines Verfahrens zur Erzeugung der Auftriebskraft und des Horizontalschubs durch die aerodynamischen Flächen gemäß dem Oberbegriff des Anspruchs 1 wird dadurch gelöst, dass sich jede aerodynamische Fläche synchron mit der Kreisbewegung in die entgegengesetzte Richtung um eine Drehachse, die zur Kreisbewegungsachse parallel verläuft, mit einer solchen Winkelgeschwindigkeit dreht, die der Winkelgeschwindigkeit der Kreisbewegung entspricht, dass jede aerodynamische Fläche die Schwankungen synchron mit der Drehung von zwei zueinander senkrecht verlaufenden Achsen ausführt, die sich in jeweils zwei zueinander senkrechten Flächen befinden, die sich in der Drehachse der aerodynamischen Flächen schneiden, wobei eine der Flächen über die Achse der Kreisbewegung und die Drehachse der aerodynamischen Flächen verläuft.

Die Drehung jeder aerodynamischen Oberfläche gemäß der Erfindung gewährleistet eine fortschreitende Bewegung (ohne Drehung) der aerodynamischen Oberfläche gegen die Luft, wodurch eine gleichmäßige Verteilung der aerodynamischen Kräfte auf der aerodynamischen Oberfläche gewährleistet ist, die zu einem höheren Wirkungsgrad der Auftriebskrafterzeugung führt.

Die Ausführung der Schwankungen durch jede aerodynamische Fläche synchron mit ihrer Drehung um zwei zueinander senkrechten Achsen, die zur Achse der Kreisbewegung der aerodynamischen Oberflächen senkrecht stehen, gewährleistet gleichzeitig mit der Auftriebskraft die Erzeugung des Horizontalschubs.

Die Erfindung wird nun anhand von Ausführungsbeispielen näher erläutert. Es zeigen:
- Fig. 1: ein Schema zur Fortbewegung von aerodynamischen Oberflächen,
- Fig. 2: aufeinanderfolgende Lagen der aerodynamischen Oberfläche bei der Erzeugung der fortschreitenden Bewegung,

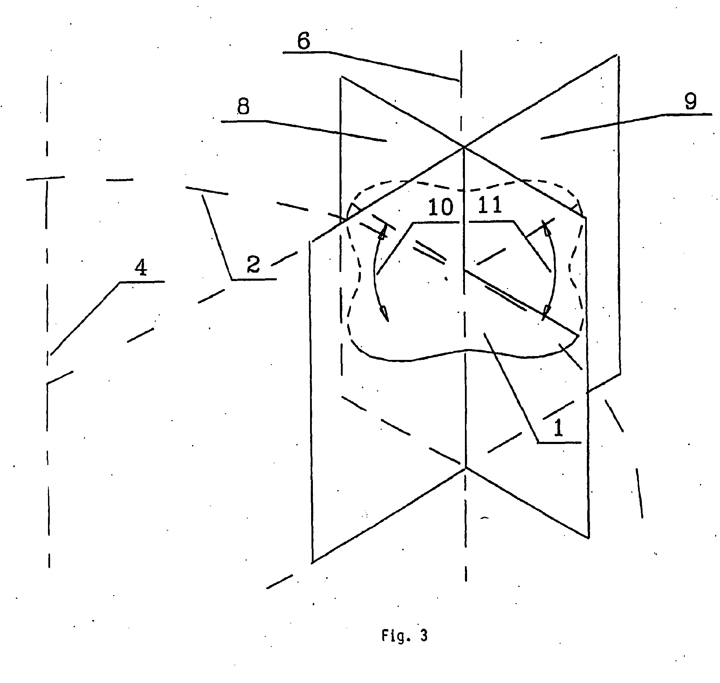

- Fig. 3: ein Schema der Schwankungen der aerodynamischen Oberfläche bei der Kreisbewegung dieser Oberfläche,

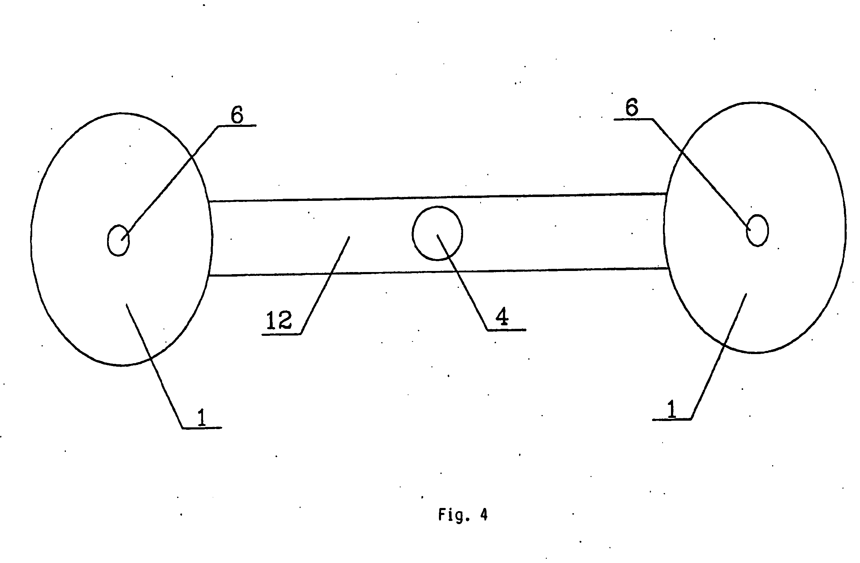

- Fig. 4: eine Draufsicht auf ein Aggregat zur Erzeugung einer Zugkraft und eines Horizontalschubs durch die aerodynamischen Oberflächen und
- Fig. 5: eine Seitenansicht des Aggregats zur Erzeugung der Zugkraft und des Horizontalschubs durch die aerodynamischen Oberflächen.

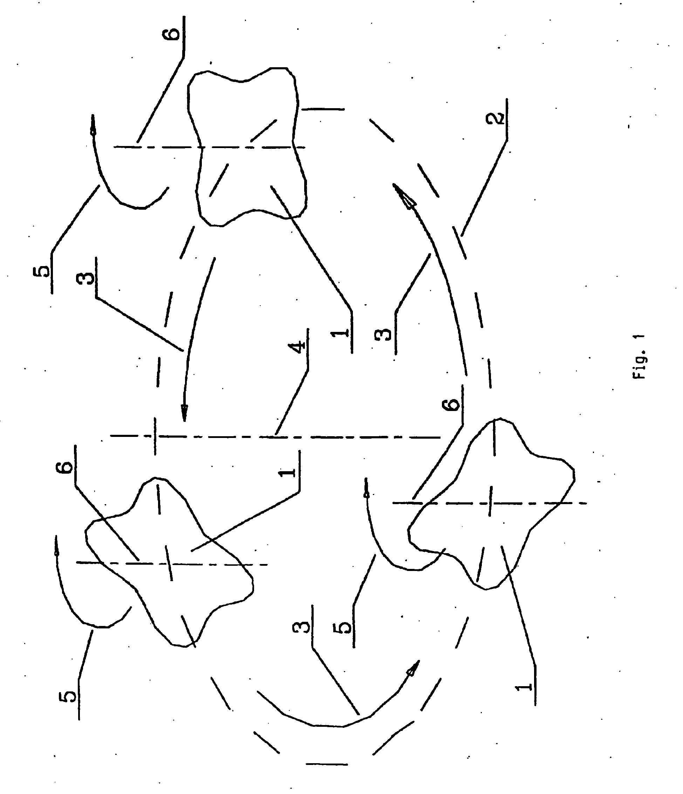

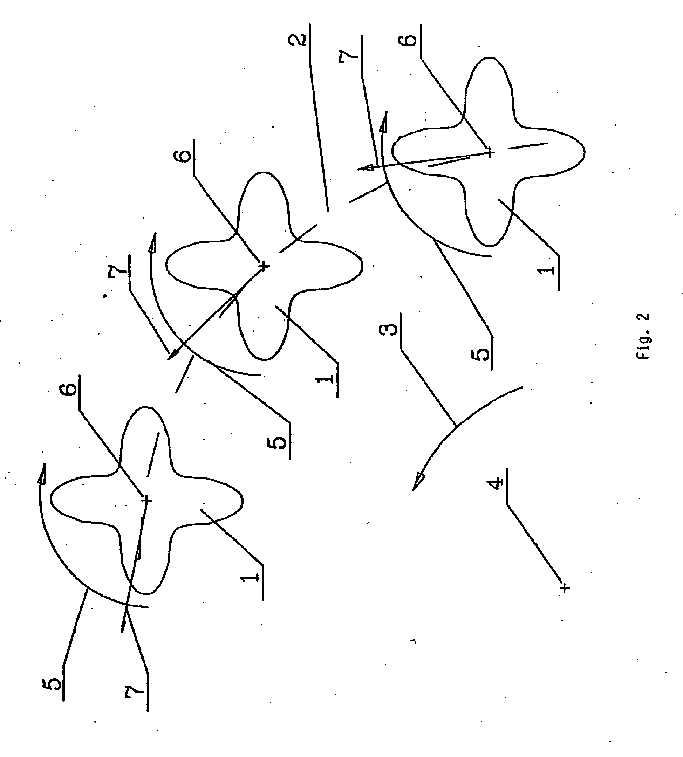

Aerodynamische Oberflächen 1 bewegen sich nach Fig. 1 in einem Kreis 2 in einer Richtung, die mit einem Pfeil 3 um eine Bewegungsachse 4 gezeigt ist. Jede aerodynamische Oberfläche 1 dreht sich synchron mit der Bewegung im Kreis 2 in die entgegengesetzte Richtung, die durch einen Pfeil 5 um eine Drehachse 6 gekennzeichnet ist, die zur Bewegungsachse 4 des Kreises 2 parallel verläuft, und zwar mit einer solchen Winkelgeschwindigkeit, die der Winkelgeschwindigkeit der Bewegung auf dem Kreis 2 gleich ist. Daraus ergibt sich eine fortschreitende Bewegung der aerodynamischen Oberflächen 1. In den drei aufeinander folgenden Positionen der aerodynamischen Oberflächen 1 in Fig. 2 ist mit Pfeilen 7 der Vektor der durchschnittlichen Momentangeschwindigkeit der aerodynamischen Oberfläche 1 gegen die Luft gezeigt. Infolge der Erzeugung der fortschreitenden Bewegung der aerodynamischen Oberflächen 1 sind die Geschwindigkeiten aller Punkte der aerodynamischen Oberflächen 1 gleich; deshalb wird die Abweichung der Oberflächenverteilung der Luftkraft von der der gleichmäßigen nur durch die Form der aerodynamischen Oberfläche definiert; diese Abweichung ist sehr gering. Jede aerodynamische Oberfläche 1 führt synchron mit ihrer Drehung eine Schwankung gegenüber zwei zueinander senkrechten Achsen aus, die sich jeweils in zwei zueinander senkrechten Flächen 8 und 9 befinden, die sich in der Drehachse 6 der aerodynamischen Fläche 1 schneiden, wobei eine der Flächen, die Fläche 9, durch die Achse 4 der Kreisbewegung und die Drehachse 6 verläuft, während die andere Fläche, die Fläche 8, den Kreis 2 berührt und parallel zur Achse 4 verläuft. Die Richtungen dieser Schwankungen sind durch Doppelpfeile 10 und 11 angegeben, die jeweils in der zugehörigen Fläche 8 bzw. 9 liegen. Weil sich die aerodynamischen Oberflächen fortschreitend bewegen, ist die zu erzeugende Auftriebskraft auf diesen Oberflächen gleichmäßig verteilt, wodurch ein hoher energetischer Wirkungsgrad des Aggregats erzielt wird. Bei den Schwankungen der aerodynamischen Oberflächen 1 um die Achsen wird gemeinsam mit der Auftriebskraft auch der Horizontalschub erzeugt, wobei die Verteilung der Luftkraft auf den aerodynamischen Oberflächen 1 wie bei einer gleichmäßigen Verteilung bleibt. Die Anzahl der aerodynamischen Oberflächen 1 und die Winkelgeschwindigkeiten der Kreisbewegung der aerodynamischen Oberflächen 1 sowie die Winkelgeschwindigketten der Schwankungen der aerodynamischen Oberflächen 1 werden mit einem Versuchs- und Berechnungsverfahren ausgewählt, wobei von der Bedingung der Erzeugung der Auftriebskraft ausgegangen wird.

Die Winkel der Schwankungen der aerodynamischen Oberflächen 1 werden mit einem Versuchs- und Berechnungsverfahren ausgewählt, wobei von der Sicherung des vorgegebenen Horizontalschubs ohne Verlust der Auftriebskraft ausgegangen wird.

Das Verfahren zur Erzeugung der Auftriebskraft und des Horizontalschubs durch die aerodynamischen Oberflächen kann z.B. mit einem Aggregat erfolgen, das in folgender Weise konstruiert ist.

Das aerodynamische Hub- und Zugvortriebsaggregat besteht aus einem Rahmen 12 mit der unbeweglichen Bewegungsachse 4 und zwei aerodynamischen Oberflächen 1, die auf dem Rahmen 12 angebracht sind. Die Drehung des Rahmens 12 zusammen mit den aerodynamischen Oberflächen1 um die unbewegliche Bewegungsachse 4 kann durch einen beliebigen, mechanischen Antrieb erfolgen, z.B. einen Motor, der auf der Bewegungsachse 4 angeordnet und mit einem Zahnrad gekoppelt ist, während am Rahmen ein zweites Zahnrad befestigt ist und die beiden Zahnräder mit einer Kette verbunden sind (in den Figuren nicht gezeigt).

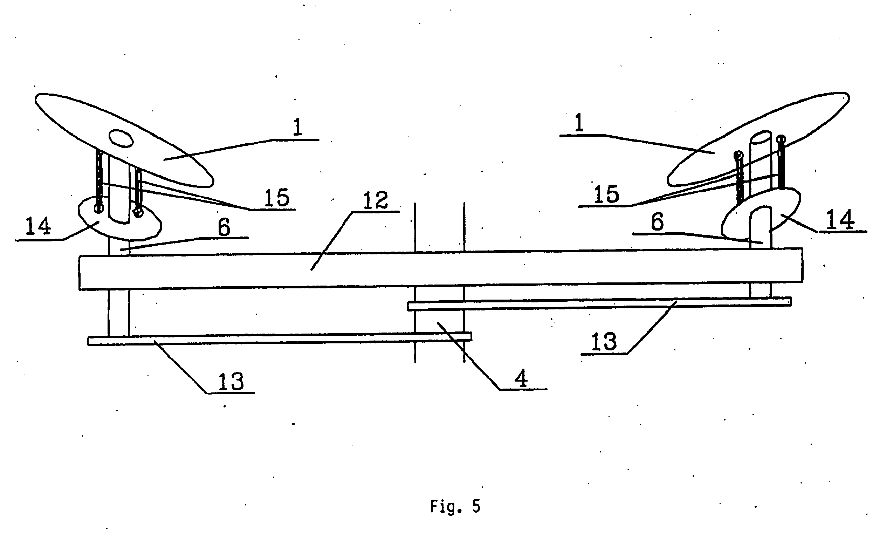

Die Drehung jeder aerodynamischen Oberfläche 1 in der entgegengesetzten Richtung mit einer Winkelgeschwindigkeit, die der Winkelgeschwindigkeit der Drehung des Rahmens 12 entspricht, erfolgt über einen Kettenantrieb 13 (Fig. 5) mit den gleichen Zahnrädern, wobei eines der Zahnräder auf der unbeweglichen Bewegungsachse 4 angebracht und mit dem Motor verbunden ist, während das andere Zahnrad an der Drehachse 6 angebracht ist, an der die aerodynamischen Oberfläche 1 befestigt ist. Die beiden Zahnräder sind mit einer Kette verbunden.

Die Schwankungen der aerodynamischen Oberflächen 1 erfolgen mittels eines mechanischen Kopiermechanismus, der eine profilierte Scheibe 14 umfasst, die an der Drehachse 6 befestigt ist. An der Drehachse 6 ist auch die aerodynamische Oberfläche 1 befestigt. Der Kopiermechanismus umfasst ferner vertikale Stockstößel 15, die über die profilierten Scheiben 14 gleiten und die mit der aerodynamischen Oberfläche 1 zusammenwirken. Die Oberfläche 1 ist mit der Drehachse über ein Gelenk verbunden, so dass sie Schwankungen ausführen kann.

### Das Aggregat arbeitet in folgender Weise:

Der Rahmen 12 mit den aerodynamischen Oberflächen 1 bewegt sich gemäß dem Kreis 2 um die Achse 4 mittels des Antriebs mit den Zahnrädern und der Antriebskette. Gleichzeitig bewegt sich jede der beiden aerodynamischen Oberflächen 1 synchron mit der Bewegung gemäß dem Kreis 2 in die entgegengesetzte Richtung um die Drehachse 6, die zur Achse 4 parallel liegt, mit einer Winkelgeschwindigkeit, die der Winkelgeschwindigkeit der Bewegung gemäß dem Kreis 2 mittels des Kettenantriebs 13 entspricht. Die Drehung des Motors wird auf das Zahnrad und weiterhin über die Kette auf das zweite Zahnrad übergetragen, wobei die Drehachse 6 sowie die jeweilige aerodynamische Oberfläche 1 in Bewegung gesetzt und eine fortschreitende Bewegung der aerodynamischen Oberflächen 1 erzielt wird. Mittels des mechanischen Kopiermechanismus führt jede aerodynamische Oberfläche 1 synchron mit der Drehung Schwankungen um zwei zueinander senkrechte Achsen aus, die sich in jeweils zwei zueinander senkrechten Flächen befinden. Diese Flächen schneiden sich in der Drehachse 6, wobei eine der Flächen über die Achse 4 und die Drehachse verläuft. Bei der Ausführung der Drehung der Drehachsen 6 und der aerodynamischen Flächen 1 dreht sich die profilierte Scheibe 14, und die über die profilierte Scheibe 14 gleitenden Stockstößel 15 rütteln die aerodynamischen Oberflächen 1 unter bestimmten Winkeln, so dass die Erzeugung des Horizontalschubs gleichzeitig mit der Erzeugung der Auftriebskraft gewährleistet wird.

Die Verwendung des Verfahrens zur Erzeugung der Auftriebskraft und des Horizontalschubs durch die aerodynamischen Oberflächen wird in folgendem Beispiel dargelegt.

Es wurde ein Triebaggregat mit zwei aerodynamischen Oberflächen 1 verwendet. Jede aerodynamische Oberfläche 1 bewegt sich auf einem Kreis zusammen mit dem Rahmen 12 um die Bewegungsachse 4 mittels eines mechanischen Getriebes, wobei sich jede aerodynamischen Oberfläche 1 synchron mit der Drehung auf dem Kreis in die entgegengesetzte Richtung um die Drehachse der parallelen Bewegungsachse 4 mit einer Winkelgeschwindigkeit dreht, die der Winkelgeschwindigkeit der Bewegung auf dem Kreis mittels des mechanischen Antriebs entspricht. Durch die Erzeugung der fortschreitenden Bewegung der aerodynamischen Flächen 1 wird eine gleichmäßige Verteilung der Luftkräfte auf den aerodynamischen Flächen 1 gewährleistet, die zu einem hohen Wirkungsgrad der Erzeugung der Auftriebskraft führt. Jede aerodynamische Oberfläche 1 führt Schwankungen synchron mit der Drehung um die zwei zueinander senkrechten Achsen durch, die sich in jeweils zwei zueinander senkrechten Flächen befinden, die sich in der Drehachse der aerodynamischen Flächen schneiden, wobei eine der Flächen über die Bewegungsachse 4 und die Drehachse 6 mittels des mechanischen Kopiermechanismus verläuft. Dabei wird gemeinsam mit der Auftriebskraft auch der Horizontalschub erzeugt, wobei die Verteilung der Luftkraft auf den aerodynamischen Oberflächen 1 gleichmäßig bleibt.

Das vorgeschlagene Aggregat zur Erzeugung der Auftriebskraft und des Horizontalschubes durch die aerodynamischen Oberflächen erlaubt, den Flug eines Fluggeräts mit einem hohen energetischen Wirkungsgrad durchzuführen.

## Patentansprüche

1. Verfahren zur Erzeugung einer Auftriebskraft und eines Horizontalschubs durch aerodynamische Oberflächen, das die Bewegung der aerodynamischen Oberflächen auf einem Kreis sowie deren Schwankungen einschließt,
**dadurch gekennzeichnet,**
**dass** sich jede aerodynamische Oberfläche synchron mit der Drehung auf dem Kreis in die entgegengesetzte Richtung um eine Drehachse, die parallel zur Achse der Bewegung auf dem Kreis verläuft, mit einer Winkelgeschwindigkeit dreht, die der Winkelgeschwindigkeit der Bewegung auf dem Kreis entspricht, und dass jede aerodynamische Fläche die Schwankungen synchron mit der Kreisdrehung um zwei zueinander senkrechte Achsen ausführt, die sich in jeweils zwei zueinander senkrechten, sich in der Drehachse der aerodynamischen Flächen schneidenden Flächen befinden, wobei eine der Flächen über die Kreisbewegungsachse und die Drehachse der aerodynamischen Fläche verläuft.

2. Fluggerät,
**gekennzeichnet durch**
eine Auftriebskraft und einen Horizontalschub nach dem Verfahren in Anspruch 1 erzeugende Mittel.

3. Fluggerät nach Anspruch 2,
**dadurch gekennzeichnet,**
**dass** die Mittel mindestens einen um eine Rotordrehachse (4) drehbar gelagerten, mindestens zwei gleichmäßig um die Rotordrehachse (4) verteilt angeordnete, vorzugsweise gleich lange Rotorblätter aufweisenden, antreibbaren Rotor (12) umfassen, wobei mindestens im Bereich der Enden der Rotorblätter jeweils eine um jeweils eine parallel zu der Rotordrehachse (4) verlaufende Drehachse (6) drehbar angeordnete, betragsmäßig mit der selben Winkelgeschwindigkeit wie der Rotor (12) entgegen der Rotordrehrichtung antreibbare aerodynamische Fläche (1) angeordnet ist.

4. Fluggerät nach Anspruch 3,
**dadurch gekennzeichnet,**
**dass** der Antrieb der aerodynamischen Flächen (1) Mittel umfasst, die eine Kopplung zwischen mindestens einem auf der Rotordrehachse (4) fest stehend angeordneten Element und den auf den Rotorblättern um die Rotordrehachse (4) umlaufenden, um ihre jeweiligen Drehachsen (6) drehbaren aerodynamischen Flächen (1) ermöglichen, so dass die aerodynamischen Flächen (1) bei ihrem Umlauf auf den Rotorblättern um die Rotorachse (4) ihre Orientierung bezüglich der Flugrichtung beibehalten.

5. Fluggerät nach Anspruch 4,
**dadurch gekennzeichnet,**
**dass** die Mittel mindestens ein auf der Rotordrehachse (4) fest stehend angeordnetes Antriebzahnrad, jeweils ein auf den Drehachsen (6) der aerodynamischen Flächen angeordnetes Abtriebzahnrad mit identischer Zähnezahl wie das Antriebzahnrad, sowie mindestens eine das Antriebzahnrad und das Abtriebzahnrad verbindende Kette (13) oder einen Riemen umfassen.

6. Fluggerät nach Anspruch 3, 4 oder 5,
**dadurch gekennzeichnet,**
**dass** jede aerodynamische Fläche (1) an der Drehachse (6) um jeweils mindestens eine senkrecht zu dieser verlaufenden Achse schwenkbar angeordnet ist (10, 11), wobei die Amplitude der Schwenkbewegung sowie die Lage des Abschnitts, in dem die Schwenkbewegung wärend eines Umlaufs um die Rotordrehachse (4) stattfindet, steuerbar ist.

7. Fluggerät nach Anspruch 6,
**dadurch gekennzeichnet,**
**dass** das Schwenken der aerodynamsichen Flächen (1) über jeweils eine Taumelscheibe (14) sowie mit der jeweiligen aerodynamischen Fläche (1) und der zugeordneten Taumelscheibe (14) in Wirkverbindung stehende Stößel (15) gesteuert wird.

8. Fluggerät nach einem der Ansprüche 3 bis 7,
**dadurch gekennzeichnet,**
**dass** die Rotorachse (4) um die Nick- und/oder Rollachse des Fluggeräts kippbar angeordnet ist.

9. Fluggerät nach einem der Ansprüche 3 bis 8,
**dadurch gekennzeichnet,**
**dass** die aerodynamischen Flächen (1) jeweils als jeweils mindestens zwei aerodynamisch profilierte Rotorblätter aufweisende Rotoren ausgebildet sind.

10. Fluggerät nach einem der Ansprüche 3 bis 9,
**dadurch gekennzeichnet,**
**dass** die Rotorblätter des Rotors (12) aerodynamisch profiliert sind.

## Claims

1. A method for generating a lifting force and a horizontal thrust by means of aerodynamic surfaces, which includes the movement of the aerodynamic surfaces on a circle, as well as their oscillations,
**characterized in that**,
synchronously with the rotation on the circle, each aerodynamic surface rotates in the opposite direction around an axis of rotation extending parallel in relation to the axis of the movement on the circle and at an angular speed corresponding to the angular speed of the movement on the circle, and that every aerodynamic surface performs the oscillations synchronously with the circular rotation around two axes, which extend perpendicularly in respect to each other and are each located on two surfaces, which are perpendicular in relation to each other and located on surfaces intersecting the axes of the aerodynamic surface, wherein one of the surfaces extends over the circular movement axis and the axis of rotation of the aerodynamic surface.

2. An aircraft,
**characterized by**
means for generating a lifting force and a horizontal thrust in accordance with the method of claim 1.

3. The aircraft in accordance with claim 2,
**characterized in that**
the means comprise at least one drivable rotor (12), which is rotatably seated around a rotating shaft (4) of the rotor and has at least two rotor blades, preferably of equal length, arranged evenly around the rotating shaft (4) of the rotor, wherein respectively one aerodynamic surface (1) is rotatably arranged at least in the area of the ends of the rotor blades, extends parallel with the rotating shaft (4) of the rotor, and can be driven opposite the direction of rotation of the rotor at the same amount of angular speed as the rotor (12).

4. The aircraft in accordance with claim 3,
**characterized in that**
the drive means of the aerodynamic surfaces (1) comprises means, which allow a coupling between at least one element, which is fixedly arranged on the rotating shaft (4) of the rotor, and the aerodynamic surfaces (1) which rotate around the respective axes (6) and are rotatable around their respective axes (6) of rotation, so that in the course of their rotation around the axis (4) of rotation the aerodynamic surfaces (1) retain their orientation in respect to the direction of flight.

5. The aircraft in accordance with claim 4,
**characterized in that**
the means comprise at least one toothed driving wheel fixedly arranged on the rotating shaft (4) of the rotor, at least one toothed driven wheel with an identical number of teeth as the toothed driving wheel, respectively arranged on the axes (6) of rotation of the aerodynamic surfaces, as well as at least one chain (13) or a belt connecting the toothed driving wheel and the toothed driven wheel.

6. The aircraft in accordance with claims 3, 4 or 5,
**characterized in that**
each aerodynamic surface (1) is arranged on the axis (6) of rotation to be pivotable (10, 11) around at least one axis extending perpendicularly to the former, wherein the amplitude of the pivot movement, as well as the position of the section in which the pivot movement takes place in the course of a revolution around the rotating shaft (4) of the rotor, are controllable.

7. The aircraft in accordance with claim 6,
**characterized in that**
the pivoting of the aerodynamic surfaces (1) is respectively controlled by means of a swash plate (14), as well as a tappet (15), which is in an operative connection both with the respective aerodynamic surface (1) and the associated swash plate (14).

8. The aircraft in accordance with one of claims 3 to 7,
**characterized in that**
the rotor shaft (4) is arranged to be tiltable around the pitch axis and/or the roll axis of the aircraft.

9. The aircraft in accordance with one of claims 3 to 8,
**characterized in that**
the aerodynamic surfaces (1) are embodied in the form of rotors, each having at least two aerodynamically profiled rotor blades.

10. The aircraft in accordance with one of claims 3 to 9,
**characterized in that**
the rotor blades of the rotor (12) are aerodynamically profiled.

## Revendications

1. Procédé de production d'une portance et d'une poussée horizontale par des surfaces aérodynamiques qui enferment le mouvement des surfaces aérodynamiques sur un cercle ainsi que leurs fluctuations
**caractérisé**
**en ce que** chaque surface aérodynamique tourne en synchronisme avec la rotation sur le cercle dans le sens opposé autour d'un axe de rotation, qui s'étend parallèlement à l'axe du mouvement sur le cercle, à une vitesse angulaire qui correspond à la vitesse angulaire du mouvement sur le cercle, et en ce que chaque surface aérodynamique exécute les fluctuations en synchronisme avec la rotation circulaire autour de deux axes perpendiculaires entre eux, qui se trouvent dans respectivement deux surfaces perpendiculaires entre elles et se coupant dans l'axe de rotation des surfaces aérodynamiques, l'une des surfaces s'étendant sur l'axe du mouvement circulaire et sur l'axe de rotation des surfaces aérodynamiques.

2. Appareil de vol
**caractérisé par**
un moyen produisant une portance et une poussée horizontale par le procédé de la revendication 1.

3. Appareil de vol suivant la revendication 2,
**caractérisé**
**en ce que** le moyen comprend au moins un rotor (12) monté tournant autour de l'axe (4) de rotation du rotor, ayant au moins deux pales de rotor, de préférence de même longueur, réparties uniformément autour de l'axe (4) de rotation du rotor et pouvant être entraîné, dans lequel au moins dans la partie des extrémités des pales du rotor, est disposée respectivement une surface (1) aérodynamique montée tournante autour de respectivement un axe (6) de rotation s'étendant parallèlement à l'axe (4) de rotation du rotor et pouvant être entraînée en valeur absolue à la même vitesse angulaire que le rotor (12) dans le sens inverse du sens de rotation du rotor.

4. Appareil de vol suivant la revendication 3,
**caractérisé,**
**en ce que** l'entraînement des surfaces (1) aérodynamiques comprend des moyens qui permettent un couplage entre au moins un élément monté fixe sur l'axe (4) de rotation du rotor et les surfaces (1) aérodynamiques tournant sur les pales du rotor autour de l'axe (4) de rotation du rotor et pouvant tourner autour de leur axe (6) de rotation respectif, de façon à ce que les surfaces (1) aérodynamiques conservent, lors de leur rotation sur les pales du rotor autour de l'axe (4) de rotation, leur orientation par rapport au sens de vol.

5. Appareil de vol suivant la revendication 4,
**caractérisé**
**en ce que** les moyens comprennent au moins une roue dentée menante, montée fixe sur l'axe (4) de rotation du rotor, respectivement une roue dentée menée, montée sur les axes (6) de rotation des surfaces aérodynamiques et ayant un nombre de dents identique à celui de la roue dentée menante, ainsi qu'au moins une chaîne (13) ou une courroie reliant la roue dentée menante et la roue dentée menée.

6. Appareil de vol suivant les revendications 3, 4 et 5,
**caractérisé,**
**en ce que** chaque surface (1) aérodynamique sur l'axe (6) de rotation est montée (10, 11) pivotante autour de respectivement au moins un axe s'étendant perpendiculairement à celui-ci, l'amplitude du mouvement de pivotement ainsi que la position de la partie, dans laquelle a lieu le mouvement de pivotement pendant un tour autour de l'axe (4) de rotation de rotor, pouvant être commandées.

7. Appareil de vol suivant la revendication 6,
**caractérisé,**
**en ce que** le pivotement des surfaces (1) aérodynamiques est commandé par, respectivement, un disque en nutation (14) ainsi que par la surface (1) aérodynamique respective et des tiges (15) en interaction avec le disque en nutation (14) associé.

8. Appareil de vol suivant les revendications 3 à 7,
**caractérisé,**
**en ce que** l'axe du rotor est monté basculant autour de l'axe de tangage et/ou de roulis de l'appareil de vol.

9. Appareil de vol suivant les revendications 3 à 8,
**caractérisé,**
**en ce que** les surfaces (1) aérodynamiques sont constituées respectivement sous la forme de respectivement au moins deux rotors ayant des pales de rotor à profil aérodynamique.

10. Appareil de vol suivant les revendications 3 à 9,
**caractérisé,**
**en ce que** les pales du rotor (12) sont profilées aérodynamiquement.
